# EUROPÄISCHE PATENTANMELDUNG

(11) **EP 4 826 930 A1**
(43) Veröffentlichungstag der Anmeldung: **21.10.2026**
(21) Anmeldenummer: 25170735.2
(22) Anmeldetag: 15.04.2025
(51) Int. Cl.: H02B 1/20, H02B 1/21, H02B 1/14, H02B 1/06

(54) **FRONTPLATTENABSCHNITT, BERÜHRUNGSSCHUTZSYSTEM UND STROMSAMMELSCHIENENSYSTEM**

(71) Anmelder: Wöhner Besitz GmbH, 96472 Rödental (DE)
(72) Erfinder: Masel, Joram, 96328 Küps (DE); Steinberger, Philipp, 96450 Coburg (DE)
(74) Vertreter: 2s-ip Schramm Schneider Bertagnoll Patent- und Rechtsanwälte Part mbB

(57) **Zusammenfassung**

Frontplattenabschnitt für Berührungsschutzsystem zur berührungssicheren Montage zumindest eines Installationsgeräts an zumindest einer Stromsammelschiene, wobei der Frontplattenabschnitt ausgestaltet ist, die zumindest eine Stromsammelschiene vor frontseitiger Berührung durch einen Menschen zu schützen, wobei der Frontplattenabschnitt zumindest eine erste Reihe von Durchlassschlitzen aufweist, durch welche das zumindest eine Installationsgerät mit zumindest einem Fuß hindurchtreten kann, um an dem Frontplattenabschnitt angeordnet und auf die zumindest eine Stromsammelschiene aufgesetzt zu werden, und wobei der Frontplattenabschnitt zumindest einen Aufnahmebereich für die zumindest eine Stromsammelschiene aufweist, in welchem die zumindest eine Stromsammelschiene aufnehmbar und fixierbar ist.

## Beschreibung

Die vorliegende Erfindung betrifft einen Frontplattenabschnitt und ein Berührungsschutzsystem und ein Stromsammelschienen.

Ein derartiges Berührungsschutzsystem ist angepasst, Stromsammelschienen zu umgeben, und bewahrt allgemein Menschen vor Stromschlägen, die durch Berührung der Stromsammelschienen z.B. beim Hantieren mit elektrischen Installationsgeräten verursacht werden können.

Damit die elektrischen Installationsgeräte auf die Stromsammelschienen unter Spannung aufgesteckt oder von diesen entfernt werden können, weist das Berührungsschutzsystem auf seiner Vorderseite Durchlassschlitze auf, durch welche die Installationsgeräte in Montageposition mit ihren Füßen hindurchgreifen können. Mit den Füßen lassen sich die Installationsgeräte dann auf der Vorderseite, also der Montageseite anordnen und an den Stromsammelschienen fixieren. Auch können sie dazu dienen, elektrischen Kontakt zwischen den Installationsgeräten und den Stromsammelschienen herzustellen.

Es gibt Berührungsschutzsysteme, welche die Stromsammelschienen vollständig einhausen. Ein solches Berührungsschutzsystem umfasst einen rückwärtigen Abschnitt, welcher die Stromsammelschienen aufnimmt und fixiert, und einen Frontabschnitt, der die Stromsammelschienen abdeckt und sie vor Berührung durch eine Person schützt. Bekannt sind hierbei Berührungsschutzsysteme, bei welchen die Stromsammelschienen in den rückwärtigen Abschnitt eingelegt oder eingeführt sind und welche nach vorn, also zur Montageseite hin, durch den Frontabschnitt, der die Durchlassschlitze aufweist, verschlossen sind.

Damit einerseits die Stromsammelschienen fest in dem Berührungsschutzsystem sitzen können, muss der sie fixierende rückwärtige Abschnitt hinreichend stabil und verwindungssteif ausgestaltet sein. Weil andererseits auch die Frontabdeckung Kräfte aufnehmen muss, muss auch diese hinreichend stabil ausgestaltet sein.

Für die Gesamtfestigkeit des berührungsgeschützten Sammelschienensystems ist somit zudem die Festigkeit der Frontabdeckung notwendig.

Bei den genannten Ausgestaltungen müssen also sowohl der rückwärtige Abschnitt als auch die Frontabdeckung des Berührungsschutzsystems sehr stabil ausgestaltet sein. Dies läuft der Anforderung zuwider, möglichst sparsam mit dem Material umzugehen.

Aufgabe ist es, einen Frontplattenabschnitt und ein Berührungsschutzsystem für Stromsammelschienen bereitzustellen, welche die genannten Nachteile zumindest teilweise beseitigen.

Diese Aufgabe wird durch den Frontplattenabschnitt bzw. durch ein Berührungsschutzsystem gemäß dem jeweiligen unabhängigen Anspruch gelöst. Vorteilhafte Weiterbildungen sind in den abhängigen Ansprüchen definiert.

Bereitgestellt wird demnach ein Frontplattenabschnitt für Berührungsschutzsystem zur berührungssicheren Montage zumindest eines Installationsgeräts an zumindest einer Stromsammelschiene, wobei der Frontplattenabschnitt ausgestaltet ist, die zumindest eine Stromsammelschiene vor frontseitiger Berührung durch einen Menschen zu schützen, wobei der Frontplattenabschnitt zumindest eine erste Reihe von Durchlassschlitzen aufweist, durch welche das zumindest eine Installationsgerät mit zumindest einem Fuß hindurchtreten kann, um an dem Frontplattenabschnitt angeordnet und auf die zumindest eine Stromsammelschiene aufgesetzt zu werden, und wobei der Frontplattenabschnitt zumindest einen Aufnahmebereich für die zumindest eine Stromsammelschiene aufweist, in welchem die zumindest eine Stromsammelschiene aufnehmbar und fixierbar ist.

Vorteilhafte Weiterbildungen umfassen folgende Merkmale:
Der Frontplattenabschnitt kann ausgestaltet sein, alleine die jeweilige Stromsammelschiene aufzunehmen und zu fixieren.

Bei dem Frontplattenabschnitt kann ferner der zumindest eine Aufnahmebereich in den Frontplattenabschnitt einstückig integriert sein.

Der Frontplattenabschnitt kann weiter aufweisen:
Eine Anzahl von Vorsprüngen, welche in den zumindest einen Aufnahmebereich hineinragen und jeweils Anschläge für die zumindest eine Stromsammelschiene bilden, wenn sie in dem zumindest einen Aufnahmebereich aufgenommen ist.

Hierbei kann eine erste Teilmenge der Vorsprünge an nach hinten fortgesetzten Stegen, welche die erste Reihe von Öffnungen beranden, angeformt sein.

Eine zweite Teilmenge der Vorsprünge kann an ebenen Flächen, an welchen die Stege angeformt sind, angeordnet sein.

Die Vorsprünge können in einem Abstand zu der Innenseite des Frontplattenabschnitts angeordnet sein, welche einer Dicke der aufzunehmenden Stromsammelschiene entspricht.

Der Frontplattenabschnitt kann Öffnungen zum Befestigen des Frontplattenabschnitts an einer Montageebene aufweisen.

Der Frontplattenabschnitt kann eine Oberfläche für die Montage der Installationsgeräte bilden.

Der Frontplattenabschnitt und die zumindest eine Stromsammelschiene können sich im Einführungszustand flächig berühren.

Die zumindest eine Aufnahme kann für ein Stromsammelschienen-Profil komplementäre Konturabschnitte aufweisen.

Die zumindest eine Aufnahme kann für mehrere verschiedene Stromsammelschienen-Profile komplementäre Konturabschnitte aufweisen.

Die zumindest eine Aufnahme kann sich entlang der ersten Richtung erstrecken.

Bereitgestellt wird ferner ein Berührungsschutzsystem, umfassend einen Frontplattenabschnitt wie vorstehend beschrieben sowie einen rückwärtigen Abschnitt, der an dem Frontplattenabschnitt befestigbar ist.

Hierbei kann der Frontplattenabschnitt von dem rückwärtigen Abschnitt zerstörungsfrei lösbar sein.

Alternativ hierzu kann der Frontplattenabschnitt von dem rückwärtigen Abschnitt nur durch Zerstörung lösbar sein.

Weiter umfasst die Erfindung auch ein Stromsammelschienensystem zum Anschluss von Installationsgeräten, umfassend ein Berührungsschutzsystem wie oben beschrieben sowie zumindest eine Stromsammelschiene, die in dem Frontplattenabschnitt des Berührungsschutzsystems aufgenommen ist.

Installationsgeräte können zumindest eines der folgenden Geräte umfassen: Motorsteuergerät, Stromversorgungsgerät, Sammelschienenadapter für elektrische Geräte, Messgerät, Anzeigegerät, Netzteil, Sicherungshalter, Lasttrennschalter, Lasttrennschalter mit Sicherungen, Sicherungslasttrennschalter, Überspannungsschutzgerät, Blitzschutzgerät, Kommunikationsgerät, Fehlerstromschutzschalter, Entstörgerät.

Weil beim erfindungsgemäßen Berührungsschutzsystem die Stromsammelschienen vom und im Frontplattenabschnitt aufgenommen und dort fixiert sind, kann der rückwärtige Abschnitt relativ einfach und materialsparend ausgestaltet sein. Demnach kann derjenige Abschnitt des Berührungsschutzsystems, der ohnehin weniger exponiert und elektrisch wie mechanisch weniger belastet ist, auch weniger massiv ausgestaltet sein.

Die Erfindung ermöglicht somit auch eine zuverlässigere Befestigung von elektrischen Installationsgeräten wie z.B. Sammelschienenadaptern, was insbesondere dann, wenn die gesamte Anordnung Vibrationen oder anderen Belastungen ausgesetzt ist, Funktionsstörungen vermeidet.

Das erfindungsgemäße Berührungsschutzsystem kann aus Kunststoff gefertigt sein.

Die Erfindung und Ausführungsformen davon werden anhand der Figuren näher beschrieben. Hierin zeigt
- Fig. 1: eine Vorderansicht der ersten Ausführungsform des erfindungsgemäßen Frontabschnitts;
- Fig. 2: drei Standard-Stromsammelschienen;
- Fig. 3: Seitenansichten des Frontplattenabschnitts mit rückwärtigem Abschnitt, des Frontplattenabschnitt alleine sowie des rückwärtigen Abschnitts alleine;
- Fig. 4: eine rückwärtige Ansicht von schräg oben in den Frontplattenabschnitt gemäß Fig. 1;
- Fig. 5: eine rückwärtige Ansicht von schräg unten in den Frontplattenabschnitt gemäß Fig. 1;
- Fig. 6: eine, teilweise geöffnete Vorderansicht des Stromsammelschienensystems der ersten Ausführungsform;
- Fig. 7: eine Vorderansicht der ersten Ausführungsformmit aufgesetztem Installationsgerät;
- Fig. 8: eine Seitenansicht der ersten Ausführungsformmit aufgesetztem Installationsgerät;
- Fig. 9: eine Vorderansicht der zweiten Ausführungsform des erfindungsgemäßen Frontabschnitts;
- Fig. 10: drei Hybrid-Stromsammelschienen für die zweite Ausführungsform;
- Fig. 11: Seitenansichten des Frontplattenabschnitts mit rückwärtigem Abschnitt, des Frontplattenabschnitts alleine sowie des rückwärtigen Abschnitts alleine;
- Fig. 12: eine rückwärtige Ansicht von schräg oben in den Frontplattenabschnitt gemäß Fig. 9;
- Fig. 13: eine rückwärtige Ansicht von schräg unten in den Frontplattenabschnitt gemäß Fig. 9;
- Fig. 14: eine vordere, teilweise geöffnete Ansicht des Stromsammelschienensystems der zweiten Ausführungsform mit aufgesetztem Installationsgerät;
- Fig. 15: eine Seitenansicht der zweiten Ausführungsform mit aufgesetztem Installationsgerät;
- Fig. 16: die zweite Ausführungsform mit einem aufgesetzten Installationsgerät, welches mittels Steckfüßen aufgesetzt ist, und
- Fig. 17: das Installationsgerät aus Fig. 16 in rückwärtiger Ansicht.

Unter "horizontal, "vertikal", "vorn", "hinten", "Frontseite" oder "Vorderseite", "Rückseite" von Elementen (z.B. Stromsammelschienen 40, Installationsgeräte 100 oder Teile davon) wird die jeweilige Orientierung oder Sicht verstanden, wenn die Elemente bestimmungsgemäß angeordnet sind und wie eine Person dies wahrnimmt, die den genannten angeordneten Elementen dann gegenübersteht.

Im Folgenden sei unterstellt, dass der Frontplattenabschnitt 1 mit den Stromsammelschienen 40 und dem rückwärtigen Abschnitt 2 vor einer vertikalen Fläche (z.B. an einer Wand in einer Schaltschrankanordnung, die nicht dargestellt ist) angeordnet ist, die Stromsammelschienen 40 parallel zueinander sind und sich jeweils in einer Richtung y erstrecken. Die y-Richtung kann - muss aber nicht - die Horizontale sein. In den nachfolgenden Beispielen ist dies nur aus Gründen der einfacheren Veranschaulichung so gewählt.

Orientierungen von Installationsgeräten (z.B. Sammelschienenadaptern) 100 beziehen sich auf deren bestimmungemäße Anordnung an den Stromsammelschienen 40. Üblicherweise werden Installationsgeräte in einer Richtung x, die orthogonal zur Richtung y ist, auf den Stromsammelschienen montiert, so dass sie alle Stromsammelschienen überdecken.

Die Richtung x, die hier auch als Längsrichtung x bezeichnet wird, ist bei horizontaler Erstreckung (y-Richtung) der Stromsammelschiene die Vertikale. Die positive vertikale Richtung zeigt dann nach oben, die negative vertikale Richtung zeigt nach unten. Die x-Richtung und die y-Richtung spannen die Ebene auf, die durch die Oberfläche des Frontplattenabschnitts 1 definiert wird.

Die Erfindung ist nicht auf Stromsammelschienensysteme mit genau drei horizontalen Stromschienen beschränkt, wie sie in den Beispielen gezeigt sind. So funktioniert die Erfindung auch mit Stromsammelschienensystemen, die weniger als drei Stromsammelschienen aufweisen, wie etwa Gleichstrom-Sammelschienensysteme (z.B. DC-Systeme mit 2 Schienen), einpolige als einzelne PE- oder N-Schiene ausgestaltete Systeme, oder auch mit z.B. 4- und 5-poligen AC-Systemen mit N- oder N- und PE-Leitern.

Bei den Stromsammelschienen kann es sich auch um solche handeln, die zusätzlich der ausschließlich für Datenübertragung bestimmt sind.

Bei den Strömen kann es sich um Starkstrom und/oder Schwachstrom handeln, die Spannung kann Hoch- und/oder Niederspannung sein, auf den Stromsammelschienen (oder einzelnen davon) können zusätzlich oder exklusiv Signale übertragen werden.

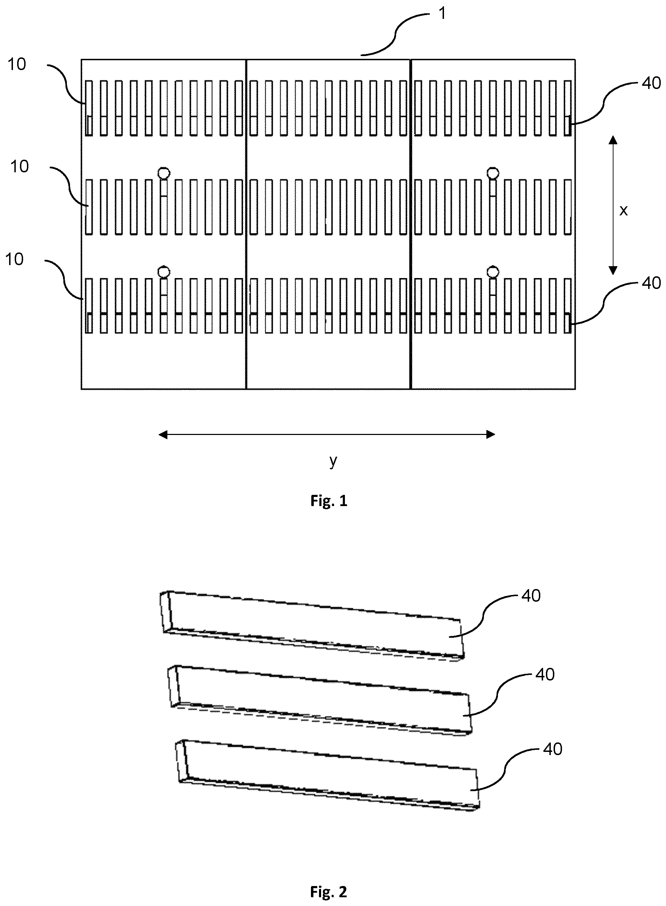

Fig. 1 zeigt eine erste Ausführungsform eines erfindungsgemäßen Frontplattenabschnitts 1 für ein Berührungsschutzsystem zur berührungssicheren Montage eines Installationsgeräts 100 an zumindest einer Stromsammelschiene 40.

Dargestellt ist eine Ausführungsform für drei Stromsammelschienen 40, vgl. Fig. 2. Die zumindest eine Stromsammelschiene 40 ist hier eine Flachschiene mit rechteckigem Profil. Natürlich sind hier auch Stromsammelschienen mit anderen Profilen möglich, z.B. Doppel-T-, Dreifach-T- oder TCC-Profile.

Der Frontplattenabschnitt 1 ist ausgestaltet, die zumindest eine Stromsammelschiene 40 vor frontseitiger Berührung durch einen Menschen zu schützen. Bei der Ausführungsform sind es drei Stromsammelschienen 40, die sich jeweils in horizontaler Richtung y erstrecken und parallel zueinander angeordnet sind, vgl. wiederum Fig. 2. In der Darstellung der Fig, 1 ist die mittlere Stromsammelschiene 40 weggelassen.

Der Frontplattenabschnitt 1 bildet eine ebene Fläche auf seiner Vorderseite.

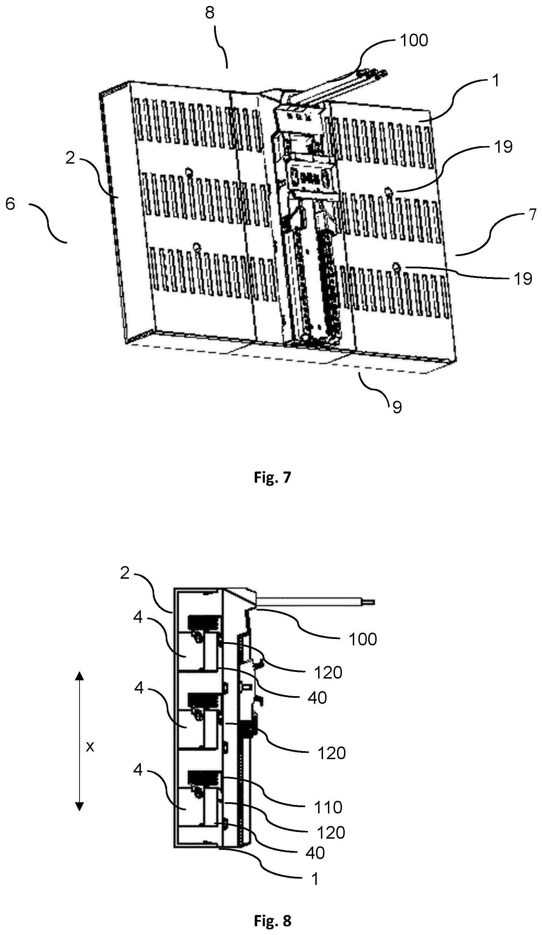

Der Frontplattenabschnitt 1 weist Durchlassschlitze 10 auf, durch welche montierte Installationsgeräte 100 (vgl. Fig. 7, Fig. 8) mit Füßen 110 und/oder Kontaktflächen 120 hindurchtreten können, um auf dem Frontplattenabschnitt 1 angeordnet und auf die zumindest eine Stromsammelschiene 40 aufgesetzt zu werden und/oder um die zumindest eine Stromsammelschiene 40 elektrisch zu kontaktieren. Die Füße 110 sind hier hakenförmig ausgestaltet, um das Installationsgerät 100 von oben auf die Stromsammelschienen 40 einzuhängen. Die Kontaktflächen 120 kontaktieren die Stromsammelschienen 40 auf deren Vorderseite.

Die Durchlassschlitze 10 sind in ersten Reihen entlang der y-Richtung, also entlang der Horizontalen, angeordnet. Es gibt so viele erste Reihen, wie es zu kontaktierende Stromsammelschienen 40 gibt.

Jeder einzelne Durchlassschlitz 10 erstreckt sich in vertikaler Richtung x und gibt die dahinterliegende Stromsammelschiene 40 zumindest teilweise frei. Die Durchlassschlitze 10 zumindest einer ersten Reihe erstrecken sich in der Vertikalen auch noch oberhalb der dahinterliegenden Stromsammelschiene 40, damit die Füße 110 der Installationsgeräte 100 von oben in die Stromsammelschiene 40 eingehängt werden können.

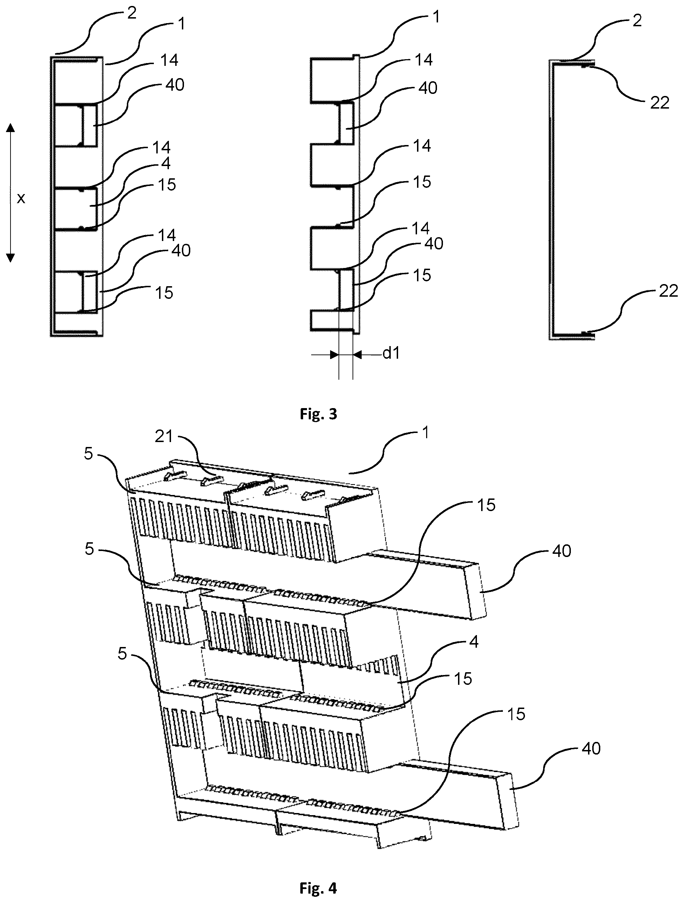

Der Frontplattenabschnitt 1 weist ferner für jede der zumindest einen Stromsammelschiene 40 einen Aufnahmebereich 4 auf, in welchem die jeweilige Stromsammelschiene 40 aufnehmbar und hierbei an dem Frontplattenabschnitt 1 fixierbar ist. Der Aufnahmebereich 4 ist auf der Rückseite des Frontplattenabschnitts 1 angeordnet, vgl. die Seitendarstellungen der Fig. 3.

Der Aufnahmebereich 4 ist als zumindest eine Aussparung gebildet, die sich in derselben Richtung y erstreckt wie die Stromsammelschiene 40, die in ihr aufgenommen werden kann.

Hierbei ist die Aussparung durch die Innenseite des Frontplattenabschnitts 1 begrenzt.

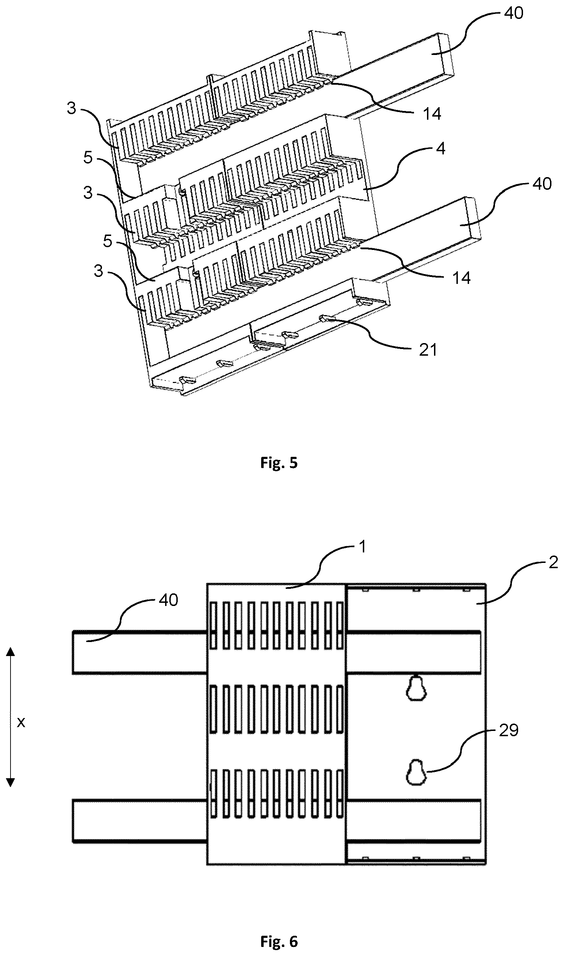

Jeder Aufnahmebereich 4 bzw. jede Aussparung ist in der Vertikalen nach oben, also in positiver x-Richtung, durch Stege 3 begrenzt, welche die Durchlassschlitze 10 beranden und nach hinten, also auf der Rückseite des Frontplattenabschnitts 1, fortgesetzt sind, vgl. Fig. 4 und Fig. 5. In der Vertikalen nach unten, also in negativer x-Richtung, ist der Aufnahmebereich 4 bzw. die Aussparung durch eine ebene Fläche 5 begrenzt. Die Ausdehnung der Aussparung in x-Richtung entspricht der Dimension der Stromsammelschiene 40 ebenfalls in x-Richtung. Die Stromsammelschiene 40 sitzt hierbei im montierten Zustand auf der Fläche 5 auf und wird von dieser gestützt. Somit ist die jeweilige Stromsammelschiene 40 ohne Spiel hinsichtlich der x-Richtung in der Ausnehmung anordenbar.

Hier ist es auch möglich, dass andere, kleinere Schienengrößen durch zusätzliche Einstellelemente einsetzbar sind.

An den nach hinten, also auf der Rückseite des Frontplattenabschnitts 1, fortgesetzten Stegen 3 befinden sich jeweils nasenartige obere Vorsprünge 14 (erste Teilmenge), welche in den Aufnahmebereich 4 hineinragen und jeweils Anschläge für die Stromsammelschiene 40 (wenn sie sich in dem Aufnahmebereich 4 befindet) bilden.

Desgleichen befinden sich auch nasenartige untere Vorsprünge 15 an den ebenen Flächen 5, an welchen die Stege 3 angeformt sind. Auch diese nasenartigen unteren Vorsprünge 15 (zweite Teilmenge) ragen in den Aufnahmebereich 4 hinein. An der ebenen Fläche 5 sind die Stege 3 des darunterliegenden Aufnahmebereichs 4 angeformt. An der ebenen Fläche der untersten Aussparung sind keine Stege 3 angeformt.

Die oberen und die unteren Vorsprünge 14, 15 sind jeweils in einem Abstand zu der Innenseite des Frontplattenabschnitts 1 angeordnet, welcher der Dicke d1 der aufzunehmenden Stromsammelschiene 40 an dieser Stelle entspricht, vgl. wiederum Fig. 3.

Demnach definieren die Vorsprünge 14, 15, die Stege 3 und die ebene Fläche 5 im Querschnitt (also entlang der Flächennormalen bezüglich der Oberfläche des Frontplattenabschnitts 1) einen Umriss, der demjenigen der aufzunehmenden Stromsammelschiene 40 entspricht.

Durch Anordnung zusätzlicher Einstellelemente im Aufnahmebereich 4 können Stromsammelschienen 40 mit unterschiedlichen Querschnitten aufgenommen werden.

Somit kann jede Stromsammelschiene 40 ohne Spiel in dem Aufnahmebereich 4 des Frontplattenabschnitts 1 aufgenommen und fixiert sein.

Das Einbringen einer Stromsammelschiene 40 in den Aufnahmebereich 4 kann durch Einschieben von einer Stirnseite 6, 7 des Frontplattenabschnitts 1 erfolgen. Flache Stromsammelschienen können auch über die Vorsprünge 14, 15 in den Aufnahmebereich 4 eingeclipst werden.

Durch den Aufnahmebereich 4 fixierbar ist die Stromsammelschiene 40 somit zumindest hinsichtlich der Richtungen, die senkrecht zu derjenigen Richtung y orientiert sind, in der sich die zumindest eine Stromsammelschiene 40 erstreckt. Bei der Ausführungsform sind diese Richtungen die Vertikale x und die Normale auf die Oberfläche des Frontplattenabschnitts 1.

Das Berührungsschutzsystem umfasst zusätzlich zu dem Frontplattenabschnitt 1 auch einen rückwärtigen Abschnitt 2, der das Berührungsschutzsystem auf der Rückseite (also nach hinten) und optional auch zumindest auf der Oberseite 8 und der Unterseite 9 berührungssicher abschließt. Der rückwärtige Abschnitt 2 ist an dem Frontplattenabschnitt 1 fixierbar. Hierzu kann der rückwärtige Abschnitt 2 Rastvorrichtungen 22, die mit komplementären Rastvorrichtungen 21 des Frontplattenabschnitts 1 zusammenwirken, aufweisen.

Der rückwärtige Abschnitt 2 muss demnach keine Fixierfunktion für die Stromsammelschienen 40 haben. Vielmehr sind die Stromsammelschienen 40 ausschließlich an dem und durch den Frontplattenabschnitt 1 fixierbar, wie weiter oben beschrieben wurde. Dies bedeutet, dass Kräfte und Momente, die durch die Sammelschienen 40 oder die daran befestigten Installationsgeräte 100 entstehen, ausschließlich von dem Frontplattenabschnitt 1 aufgenommen werden können.

Der Frontplattenabschnitt 1 und der rückwärtige Abschnitt 2 können, einmal zusammengesetzt, zerstörungsfrei wieder voneinander lösbar sein. Dies bedeutet, dass der Frontplattenabschnitt 1 und der rückwärtige Abschnitt beliebig oft zusammengesetzt und voneinander gelöst werden können, ohne beschädigt zu werden. Diese Ausführung ist z.B. dann von Vorteil, wenn eine Wartung, ein Austausch oder eine Umkonfigurierung der darin aufgenommenen Stromsammelschiene(n) 40 möglich sein soll.

Alternativ kann auch vorgesehen sein, dass der Frontplattenabschnitt 1 und der rückwärtige Abschnitt 2 lediglich durch Zerstörung der Verbindung voneinander trennbar sind. Diese Variante ist z.B. dann von Vorteil, wenn gerade verhindert werden soll, dass die einmal vorgenommene Konfiguration der im Berührungsschutzsystem aufgenommenen Stromsammelschienen 40 nachträglich verändert wird.

Das Berührungsschutzsystem bzw. der Frontplattenabschnitt 1 und/oder der rückwärtige Abschnitt 2 können - müssen aber nicht - modulartig aufgebaut sein. Dann sind der Frontplattenabschnitt 1 und/oder der rückwärtige Abschnitt 2 des Berührungsschutzsystems in mehrere Module unterteilt. Die Module können aneinandergereiht werden, um Berührungsschutzsysteme unterschiedlicher Ausdehnungen in y- und/oder in x-Richtung zu bilden. Die Figuren zeigen eine solche Ausgestaltung mit drei verschiedenen Modulen, die in y-Richtung aneinander gereiht sind, und zwar einem linken Randmodul, einem zentralen Modul und einem rechten Randmodul. Hierbei sind sowohl der Frontplattenabschnitt 1 als auch der rückwärtige Abschnitt 2 jeweils als drei verschiedene Module ausgestaltet.

Ein Mittelmodul ist auf zwei Umfangsseiten 8, 9 geschlossen, also oben und unten (in x-Richtung), und auf den beiden übrigen Umfangsseiten 7, 8, also links und rechts (y-Richtung), geöffnet, so dass es dort jeweils mit einem weiteren Modul koppelbar ist.

Ein Randmodul ist auf drei Umfangsseiten 7, 8, 9 bzw. 6, 8, 9 geschlossen, während es zur vierten Umfangsseite 6 bzw. 7 offen ist, so dass es nur dort mit einem weiteren Modul gekoppelt werden kann.

Die Flächen der Umfangsseiten 6, 7, 8, 9 können entweder am Frontplattenabschnitt 1 oder an dem rückwärtigen Abschnitt 2 angeformt sein. Bei der modulartigen Ausführung bietet es sich an, die Flächen der oberen Umfangseite 8 und der unteren Umfangsseite 9 jeweils an den Modulen anzuformen, die den rückwärtigen Abschnitt 2 bilden, die übrigen können, sofern vorhanden, auch an den Frontplattenabschnitten 1 angeformt sein. Allerdings sind davon abweichende Anformungen möglich.

Der Frontplattenabschnitt 1, der rückwärtige Abschnitt 2 bzw. das ganze Berührungsschutzsystem ist aus isolierendem Kunststoff gefertigt, es bietet IP-20-Schutz, also Schutz gegen Eindringen von Fremdkörpern und gegen Berührung der Stromsammelschienen 40 im Innern des Berührungsschutzsystems durch eine Person.

Fig. 7 und Fig. 8 zeigen ein erfindungsgemäßes Berührungsschutzsystem 1 mit einem Frontplattenabschnitt 1 gemäß Fig. 1 mit einem am Frontplattenabschnitt 1 befestigten elektrischen Installationsgerät 100. Das Installationsgerät 100 weist Füße 110 auf, mit denen es durch die Schlitze 10 und hinter die Stromsammelschienen 40 greifen kann. Es kann also mit den Füßen 110 auf den Stromsammelschienen 40 eingehängt werden.

Der elektrische Kontakt kann ebenfalls durch die Füße 110 hergestellt sein und/oder durch davon separate Kontaktflächen 120, die ebenfalls durch die Schlitze 10 hindurchgreifen aber die Frontfläche der Stromsammelschiene 40 kontaktieren. Die Kontaktflächen 120 sind ebenfalls an dem Gerät 100 angeordnet, vgl. die Seitenansicht gemäß Fig. 8.

Die Füße 110 können hakenförmig ausgestaltet sein und eine Sammelschiene 40 hintergreifen. Mit solchen Haken können die Geräte durch Aufschieben an den Stromsammelschienen 40 an- oder eingehängt oder verankert werden. Auch können die Füße als Auflagen ausgestaltet sein, die durch Aufschrauben des Installationsgeräts 100 gegen die Sammelschiene gepresst werden.

Die elektrischen Kontaktflächen sind auf ihrer der Stromsammelschiene 40 zugewandten Seite flach, um eine gute elektrische Leitfähigkeit zu gewährleisten.

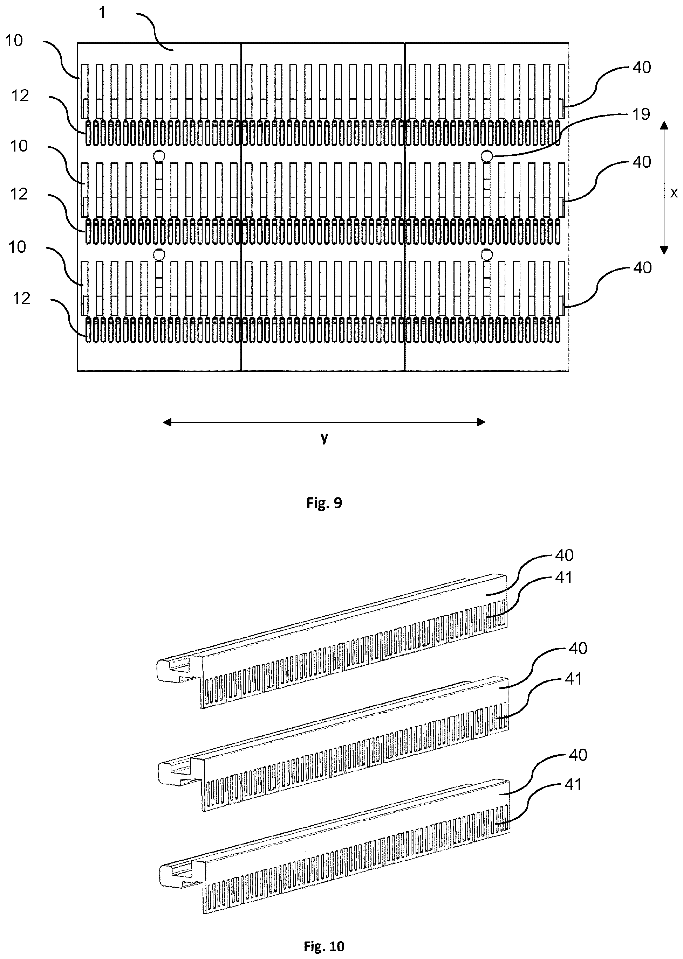

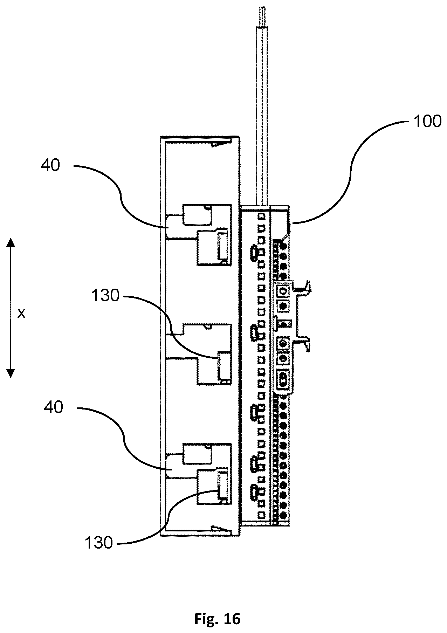

Fig. 9 zeigt eine zweite Ausführungsform der Erfindung. Der Frontplattenabschnitt 1 dieser Ausführungsform ist ausgelegt, zumindest eine Stromsammelschiene 40 des Hybrid-Typs aufzunehmen. Hier sind es wiederum drei Stromsammelschienen 40. Stromsammelschienen 40 des Hybrid-Typs bieten die Möglichkeit, Installationsgeräte 100 nicht nur von oben in die Stromsammelschiene 40 einzuhängen (wie bei der ersten Ausführungsform) sondern auch von vorn, also in der Frontfläche der Stromsammelschiene 40 einzurasten. Hierzu weist die Stromsammelschiene 40 in ihrer Frontseite eine zweite Reihe von Öffnungen 12, z.B. Schlitze, auf, in welche entsprechende Steckfüße 130 und Steckkontakte 120 der Installationsgeräte 100 eingreifen können, vgl. weiter unten zur Fig. 16. Es gibt so viele zweite Reihen von Öffnungen 12, wie es Stromsammelschienen 40 gibt.

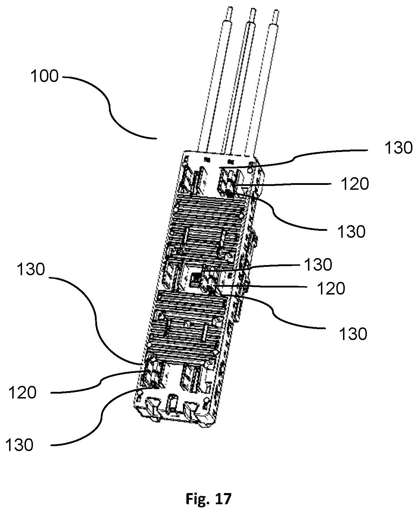

Die Steckfüße 130 können hierbei der Fixierung des Installationsgeräts 100 dienen, indem sie Kräfte in x- und y-Richtung aufnehmen. Wenn diese Steckfüße beiderseits eines Steckkontakts 120 angeordnet sind, sind es Kontaktschutzrippen, vgl. Fig. 17.

Alternativ können die Steckfüße 130 ausgestaltet sein, elektrischen Kontakt zu jeweils einer Stromsammelschiene 40 herzustellen. Dann können separate Füße 120 für die elektrische Kontaktierung entfallen.

Fig. 10 illustriert Hybrid-Stromsammelschienen 40. Im oberen Bereich nach vorn gleicht die Hybrid-Stromsammelschiene 40 derjenigen der ersten Ausführungsform, so dass die gleichen Installationsgeräte 100 befestigbar sind wie an diejenigen der ersten Ausführungsform. Auf der Vorderseite weist die Hybrid-Stromsammelschiene 40 einen flachen Bereich auf, der Öffnungen 41, z.B. Schlitze, besitzt. Diese Öffnungen 41 erstrecken sich jeweils in (vertikaler) x-Richtung und sind in einer Reihe in y-Richtung angeordnet.

Dementsprechend weist der Frontplattenabschnitt 1 dieser Ausführungsform zumindest eine zweite Reihe von Schlitzen 12 auf, die bei aufgenommener Hybrid-Stromsammelschiene 40 mit deren Öffnungen 41 fluchten.

Die zumindest eine zweite Reihe von Schlitzen 12 ist unterhalb der zumindest einen ersten Reihe von Schlitzen 10 angeordnet.

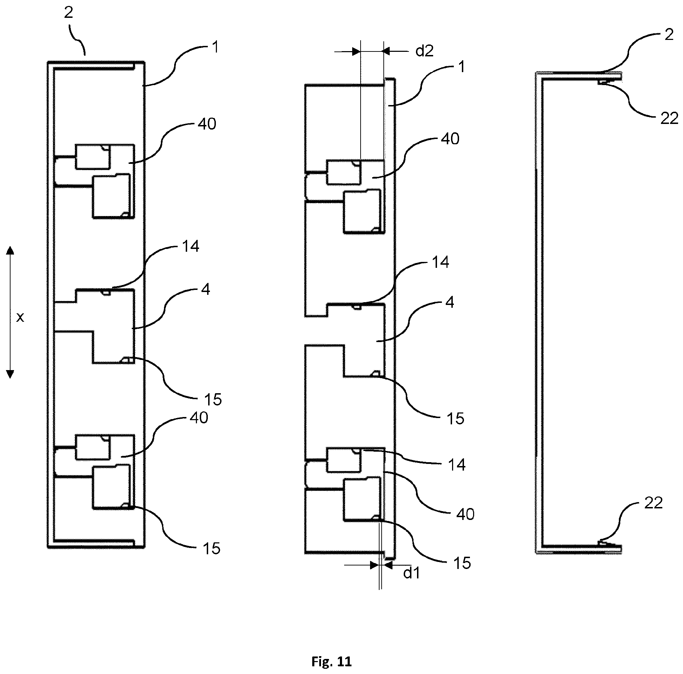

Fig. 11 zeigt Darstellungen des Frontplattenabschnitts 1 der zweiten Ausführungsform mit Hybridschiene 40 und angebrachtem rückwärtigen Abschnitt 2, daneben ohne den rückwärtigen Abschnitt 2 und rechts nur den rückwärtigen Abschnitt 2.

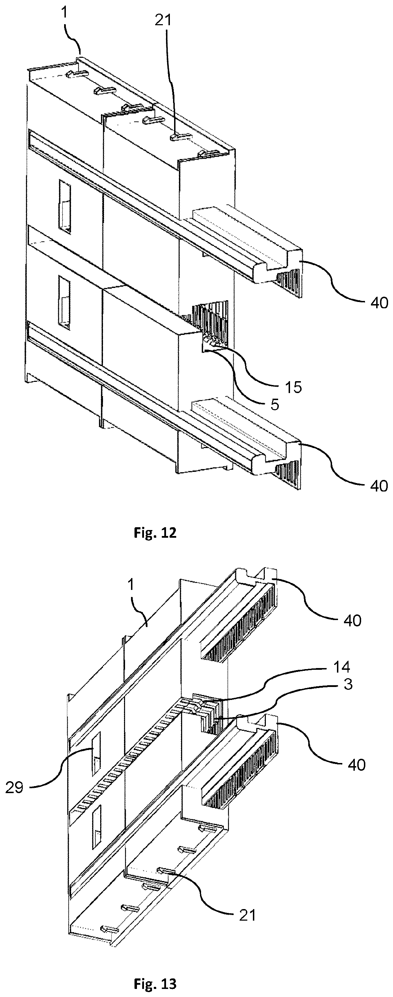

Die Aussparung ist in der Vertikalen nach oben, also in positiver x-Richtung, durch die Stege 3 begrenzt, welche die Durchlassschlitze 10 beranden und nach hinten, also auf der Rückseite des Frontplattenabschnitts 1, fortgesetzt sind, vgl. Fig 13. In der Vertikalen nach unten, also in negativer x-Richtung, ist die Aussparung durch eine ebene Fläche 5 begrenzt, vgl. Fig. 12.

Sowohl die Stege 3 als auch die Fläche 5 folgen in ihrem Verlauf in Richtung der Flächennormalen auf den Frontplattenabschnitt 1 der Querschnittskontur der aufzunehmenden Stromsammelschiene 40. Sie sind also gestuft.

Es sind auch hier die Vorsprünge 14 und 15 vorhanden, die den Aufnahmebereich 4 beranden, vgl. auch die Darstellungen der Fig. 12 und 13. Hierbei sind die oberen Vorsprünge 14 in einem Abstand von der Rückseite der Vorderfront des Frontplattenabschnitts 1 angeordnet, welcher der Dicke d2 der Hybrid-Stromsammelschiene 40 an dieser Stelle entspricht. Die unteren Vorsprünge 15 sind in einem Abstand entsprechend der dortigen Dicke d1 der Hybrid-Stromsammelschiene 40 angeordnet.

Demnach definieren die Vorsprünge 14, 15, die Stege 3 und die Fläche 5 im Querschnitt (also entlang der Flächennormalen bezüglich der Oberfläche des Frontplattenabschnitts 1) einen Umriss, der demjenigen der aufzunehmenden Stromsammelschiene 40 entspricht. Die Stromsammelschiene 40 sitzt im montierten Zustand auf der gestuften Fläche 5 auf und wird von dieser gestützt. Somit ist die jeweilige Stromsammelschiene 40 ohne Spiel hinsichtlich der x-Richtung in der Aussparung anordenbar.

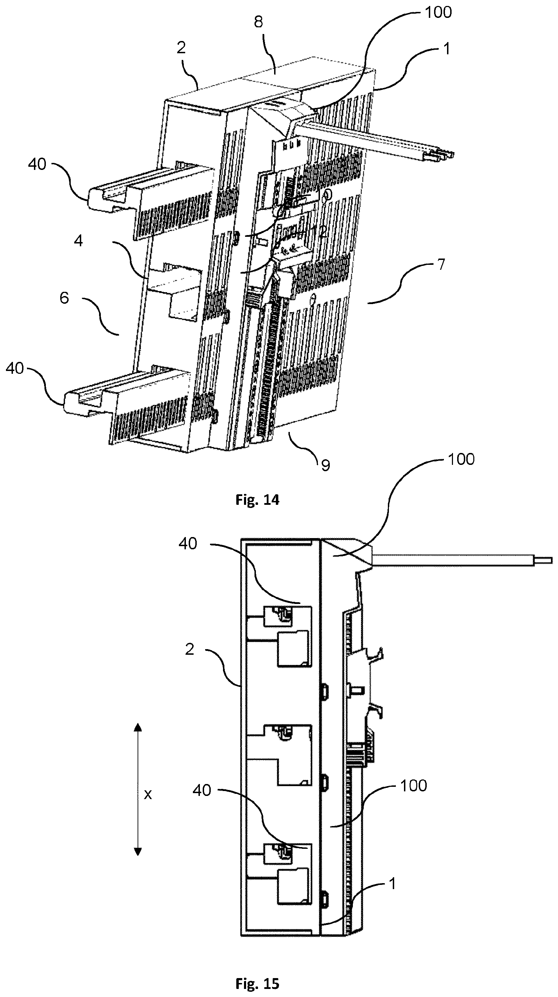

Fig. 14 zeigt das teilweise geöffnete Berührungsschutzsystem mit Frontplattenabschnitt 1 der zweiten Ausführungsform und Hybrid-Stromsammelschienen 40 und einem aufgesetzten Installationsgerät 100, wobei wiederum die mittlere Hybrid-Stromsammelschiene weggelassen ist, um einen Blick in den Aufnahmebereich 4 zu gestatten.

Fig. 15 zeigt eine Seitenansicht des Berührungsschutzsystems mit aufgesetztem Installationsgerät 100.

In gleicher Weise wie die erste Ausführungsform kann auch die zweite Ausführungsform modulartig ausgestaltet sein. Es wird auf die obige Beschreibung verwiesen.

Fig. 16 zeigt die zweite Ausführungsform der Erfindung bei entfernter Seite mit einem Installationsgerät 100, welches mittels Steckfüßen 130 durch die zweite Reihe von Öffnungen 12, z.B. Schlitz, hindurch in die Stromsammelschienen 40 eingesteckt ist. Die Steckfüße 130 dienen der Befestigung des Installationsgeräts 100 an dem Berührungsschutzsystem bzw. den Stromsammelschienen 40 und vermitteln den elektrischen Kontakt mit den Stromsammelschienen 40.

Fig. 17 zeigt das Installationsgerät 100, hier ein Adapter, in rückwärtiger Ansicht. Es weist an seiner Rückseite, also derjenigen Seite, die bei Montage auf dem Berührungsschutzsystem der Frontplattenabschnitt zugewandt ist, einen elektrischen Kontakt 120 pro zu kontaktierender Stromsammelschiene 40 auf. Jeder Kontakt 120 ist hier als Steckkontakt 120 ausgebildet und von einem Paar von Steckfüßen 130, die als Kontaktschutzrippen 130 ausgestaltet sind, umgeben.

Der Frontplattenabschnitt 1 beider Ausführungsformen weist zudem Einrichtungen 19 zum Befestigen des Berührungsschutzsystems mitsamt den durch den Frontplattenabschnitt 1 gehaltenen Stromsammelschienen 40 an einer Montageebene wie z.B. Wand, Montageplatte oder sonstigen Vorkehrungen z.B. in einem Schaltschrank auf. Diese können als eine Anzahl von Öffnungen 19 ausgebildet sein, die über die Oberfläche des Frontplattenabschnitts 1 verteilt angeordnet sind. Das Berührungsschutzsystem kann dann mittels Schrauben oder sonstigen Befestigungsmitteln fixiert werden. Der rückwärtige Abschnitt 2 weist an entsprechenden Stellen ebenfalls Öffnungen 29 (Fig. 13) auf, durch welche die Schrauben oder sonstigen Befestigungsmittel hindurchgehen können.

### Liste der Bezugszeichen

- 1: Frontplattenabschnitt
- 2: rückwärtiger Abschnitt
- 3: Steg
- 4: Aufnahmebereich
- 5: ebene Fläche
- 6: Stirnseite (Umfangsseite)
- 7: Stirnseite (Umfangsseite)
- 8: obere Umfangsseite
- 9: untere Umfangsseite
- 10: Durchlassschlitz der ersten Reihe
- 12: Durchlassschlitz der zweiten Reihe
- 14: oberer Vorsprung (erste Teilmenge)
- 15: unterer Vorsprung (zweite Teilmenge)
- 19: Öffnung
- 21: Rastvorrichtung
- 22: Rastvorrichtung
- 29: Öffnung
- 40: Stromsammelschiene
- 41: Stromsammelschienen-Schlitz
- 100: Installationsgerät
- 110: Fuß, hakenförmiger Fuß
- 120: elektrischer Kontakt, Steckkontakt
- 130: Steckfuß, Kontaktschutzrippe
- d1: Dicke
- d2: Dicke
- x: Längsrichtung, vertikale Richtung
- y: horizontale Richtung

## Patentansprüche

1. Frontplattenabschnitt (1) für Berührungsschutzsystem zur berührungssicheren Montage zumindest eines Installationsgeräts (100) an zumindest einer Stromsammelschiene (40), wobei der Frontplattenabschnitt (1) ausgestaltet ist, die zumindest eine Stromsammelschiene (40) vor frontseitiger Berührung durch einen Menschen zu schützen, wobei der Frontplattenabschnitt (1) zumindest eine erste Reihe von Durchlassschlitzen (10) aufweist, durch welche das zumindest eine Installationsgerät (100) mit zumindest einem Fuß (110, 120, 130) hindurchtreten kann, um an dem Frontplattenabschnitt (1) angeordnet und auf die zumindest eine Stromsammelschiene (40) aufgesetzt zu werden, und
wobei der Frontplattenabschnitt (1) zumindest einen Aufnahmebereich (4) für die zumindest eine Stromsammelschiene (40) aufweist, in welchem die zumindest eine Stromsammelschiene (40) aufnehmbar und fixierbar ist.

2. Frontplattenabschnitt nach Anspruch 1, wobei der Frontplattenabschnitt (1) ausgestaltet ist, alleine die jeweilige Stromsammelschiene (40) aufzunehmen und zu fixieren.

3. Frontplattenabschnitt (1) nach einem der vorhergehenden Ansprüche, wobei der zumindest eine Aufnahmebereich (4) in den Frontplattenabschnitt (1) einstückig integriert ist.

4. Frontplattenabschnitt (1) nach einem der vorherigen Ansprüche, weiter aufweisend:
Eine Anzahl von Vorsprüngen (14, 15), welche in den zumindest einen Aufnahmebereich (4) hineinragen und jeweils Anschläge für die zumindest eine Stromsammelschiene (40) bilden, wenn sie in dem zumindest einen Aufnahmebereich (4) aufgenommen ist.

5. Frontplattenabschnitt (1) nach dem vorhergehenden Anspruch, wobei eine erste Teilmenge der Vorsprünge (14) an nach hinten fortgesetzten Stegen (3), welche die erste Reihe von Öffnungen beranden, angeformt sind.

6. Frontplattenabschnitt (1) nach dem vorhergehenden oder dem vorvorhergehenden Anspruch, wobei eine zweite Teilmenge der Vorsprünge (15) an ebenen Flächen (5), an welchen die Stege (3) angeformt sind, angeordnet sind.

7. Frontplattenabschnitt (1) nach dem vorhergehenden Anspruch, wobei die Vorsprünge (14, 15) in einem Abstand zu der Innenseite des Frontplattenabschnitts (1) angeordnet, welche einer Dicke (d1, d2) der aufzunehmenden Stromsammelschiene (40) entspricht.

8. Frontplattenabschnitt (1) nach einem der vorhergehenden Ansprüche, wobei der Frontplattenabschnitt (1) Öffnungen (19) zum Befestigen des Frontplattenabschnitts (1) an einer Montageebene aufweist.

9. Frontplattenabschnitt (1) nach einem der vorhergehenden Ansprüche, wobei der Frontplattenabschnitt (1) eine Oberfläche für die Montage der Installationsgeräte (100) bildet.

10. Frontplattenabschnitt (1) nach einem der vorherigen Ansprüche, wobei der Frontplattenabschnitt (1) und die zumindest eine Stromsammelschiene (40) sich im Einführungszustand flächig berühren.

11. Frontplattenabschnitt (1) nach einem der vorhergehenden Ansprüche, wobei die zumindest eine Aufnahme (4) für ein Stromsammelschienen-Profil komplementäre Konturabschnitte aufweist.

12. Frontplattenabschnitt (1) nach einem der vorhergehenden Ansprüche, wobei die zumindest eine Aufnahme (4) für mehrere verschiedene Stromsammelschienen-Profile komplementäre Konturabschnitte aufweist.

13. Frontplattenabschnitt (1) nach einem der vorhergehenden Ansprüche, wobei sich die zumindest eine Aufnahme (4) entlang der ersten Richtung (y) erstreckt.

14. Berührungsschutzsystem, umfassend einen Frontplattenabschnitt (1) nach einem der vorhergehenden Ansprüche sowie einen rückwärtigen Abschnitt (2), der an dem Frontplattenabschnitt (1) befestigbar ist.

15. Berührungsschutzsystem nach Anspruch 14, wobei der Frontplattenabschnitt (1) von dem rückwärtigen Abschnitt (2) zerstörungsfrei lösbar ist.

16. Berührungsschutzsystem nach Anspruch 14, wobei der Frontplattenabschnitt (1) von dem rückwärtigen Abschnitt (2) nur durch Zerstörung lösbar ist.

17. Stromsammelschienensystem zum Anschluss von Installationsgeräten (100), umfassend ein Berührungsschutzsystem nach einem der Ansprüche 14 bis 16 sowie zumindest eine Stromsammelschiene (40), die in dem Frontplattenabschnitt (1) des Berührungsschutzsystems aufgenommen ist.

18. Stromsammelschienensystem nach Anspruch 17, wobei das zumindest eine Installationsgerät (100) zumindest eines der folgenden Geräte umfasst:
Motorsteuergerät,
Stromversorgungsgerät,
Adapter für elektrisches Gerät,
Messgerät,
Anzeigegerät,
Netzteil,
Sicherungshalter,
Lasttrennschalter,
Lasttrennschalter mit Sicherungen,
Sicherungslasttrennschalter,
Überspannungsschutzgerät,
Blitzschutzgerät,
Kommunikationsgerät,
Fehlerstromschutzschalter,
Entstörgerät.
